# EUROPÄISCHE PATENTSCHRIFT

(11) **EP 0 605 748 B1**
(45) Veröffentlichungstag und Bekanntmachung des Hinweises auf die Patenterteilung: **26.03.1997**
(21) Anmeldenummer: 93100116.8
(22) Anmeldetag: 07.01.1993
(51) Int. Cl.: C22B 7/00, B01J 38/00, B01J 23/96, B01J 38/72, C22B 11/00

(54) **Verfahren und Vorrichtung zur Aufbereitung von Metallträger-Katalysatoren**
Process and apparatus for the treatment of catalysts on metal supports
Procédé et dispositif de traitement des catalyseurs à support métallique

(43) Veröffentlichungstag der Anmeldung: 13.07.1994
(73) Patentinhaber: EAR EUROPEAN AUTOCAT RECYCLING GmbH, D-63755 Alzenau (DE)
(72) Erfinder: Giegerich, Heinz, W-6450 Hanau (DE); Hensel, Clemens, W-6451 Grosskrotzenburg (DE)
(74) Vertreter: Knoblauch, Andreas, Dr.-Ing.

(56) Entgegenhaltungen:
- EP-A- 0 452 630
- DE-A- 2 525 829
- DE-A- 3 844 214
- GB-A- 1 107 627
- US-A- 4 888 316

## Beschreibung

Die Erfindung bezieht sich auf ein Verfahren und eine Vorrichtung zur Aufbereitung von Metallträger-Katalysatoren, die eine Metallhülle, Trägerfolien und auf den Trägerfolien angeordnete, oberflächenvergrößernde Überzüge (Washcoat), die Edelmetalle tragen, aufweisen.

Seit geraumer Zeit werden zur Reinigung von Abgasen von Verbrennungsmotoren insbesondere in Kraftfahrzeugen Keramikträger-Katalysatoren verwendet, welche in einer als Auspufftopf ausgebildeten Metallhülle einen Keramik-Körper tragen, auf dem katalytisch wirkende Stoffe, insbesondere Edelmetalle wie Platin, Palladium oder Rhodium abgeschieden sind. Die katalytische Wirkung tritt erst bei einer bestimmten Temperatur des Katalysators im gewünschen Ausmaß ein. Aufgrund der großen Masse des Keramik-Körpers werden derartige Katalysatoren erst nach einer längeren Zeit nach dem Start eines Verbrennungsmotores wirksam. Weiterhin sind Keramikträger gegen mechanische und thermische Schockbelastungen empfindlich, so daß Vibrationen und rasche Temperaturwechsel vermieden werden müssen.

Die Nachteile schlechter Kaltstarteigenschaften und besonderer Schockempfindlichkeit vermeiden Metallträger-Katalysatoren. Diese bestehen im wesentlichen aus einer mit Anschlußstutzen, zumindest einem Einlaß- und einem Auslaßstutzen, versehenen Metallhülle, welche in Lagen angeordnete Trägerfolien umgibt, auf denen als Washcoat bezeichnete oberflächenvergrößernde dünne Überzüge mit dem Katalysatormaterial angeordnet sind. Die Metallhülle und die Anschlußstutzen bestehen zumeist aus Edelstahl oder einer nichtmagnetischen Eisenlegierung. Die Trägerfolie besteht aus einer ferromagnetischen Fe-Cr-Al-Legierung von geringer Stärke. Die Trägerfolien der einzelnen Lagen sind abwechselnd glatt bzw. wellenförmig profiliert. Im Bereich der Wellenmaxima berühren sich die Folien der benachbarten Lagen und können beispielsweise durch Löten miteinander verbunden sein. Die oberflächenvergrößernden Washcoat-Schichten bestehen aus Gamma-Aluminium-Oxid. Die Oberfläche des Washcoats ist mit Edelmetallen imprägniert.

Aufgrund der geringen Masse an Washcoat und Trägerfolie wird ein Metallträger-Katalysator von den Abgasen eines Verbrennungsmotors rasch erwärmt, so daß die katalytische Wirkung bereits kurz nach dem Start des Verbrennungsmotors eintritt. Aufgrund seiner Unempfindlichkeit gegen mechanische und thermische Schockbelastungen kann ein Metallträger-Katalysator in der Abgasleitung näher zum Motor hin als ein Keramikträger-Katalysator angeordnet werden, so daß die Aufheizung besonders rasch erfolgen kann. Einer größeren Verbreitung dieser umweltfreundlichen Metallträger-Katalysatoren steht jedoch bisher die fehlende oder unzureichende Recyclingfähigkeit im Wege.

Katalysatoren von Verbrennungsmotoren werden im Rahmen der Entsorgung mechanisch aufbereitet und chemisch verarbeitet, um insbesondere die aktiven Katalysatorstoffe wie Platin, Palladium und Rhodium zurückzugewinnen. Zur Aufbereitung stehen gebrauchte Katalysatoren an, wenn ihre katalytische Aktivität nachgelassen hat. Auch relativ neue Katalysatoren, die beispielsweise durch einen Unfall beschädigt sind, müssen aufbereitet werden. Der Ausbau erfolgt nicht immer mit der erforderlichen Sorgfalt, so daß häufig Katalysatoren mit mechanischen Beschädigungen, verschlossenen Anschlußstutzen oder Resten von Abgasleitungen angeliefert werden.

Es ist bekannt (JP 02-209-433), einen Metallträger-Katalysator ohne Entfernung der Metallhülle aufzuarbeiten. Der Katalysator wird in einem elektrischen Ofen aufgeheizt und anschließend in Wasser abgeschreckt. Hierdurch werden die Gamma-Aluminium-Oxidschichten des Washcoats mit den Edelmetallen aufgrund unterschiedlicher Wärmeausdehnungskoeffizienten von den Trägerfolien und der Metallhülle abgetrennt. Die Mischung aus Gamma-Aluminium-Oxid und Edelmetallen wird anschließend mit einer wässrigen Lösung von Natronlauge behandelt, wobei das Gamma-Aluminium-Oxid aufgelöst wird. Die Edelmetalle werden durch Filterung zurückgewonnen. Dieses Verfahren ist lediglich auf eine Abtrennung und Aufkonzentrierung der Edelmetalle angelegt, wobei die Metallhülle weiterhin mit der Trägerfolie verbunden bleibt, auch können nur Katalysatoren mit offenen Anschlußstutzen zum Einsatz gelangen.

Der Erfindung liegt das Problem zugrunde, ein Verfahren und eine Vorrichtung zur Aufbereitung von Metallträger-Katalysatoren zu schaffen, um Metallträger-Katalysatoren im Anlieferungszustand ohne jegliche Vorbereitung des Katalysators auf einfache Weise in verschiedene jeweils werkstoffgerecht weiterverarbeitbare Bestandteile zu zerlegen, wobei der für die Edelmetallrückgewinnung bestimmte Bestandteil sämtliche Katalysator-Edelmetalle vollständig, in hoher Konzentration und frei von Chemikalien oder Schadstoffen enthalten soll.

Das Problem wird für das Verfahren erfindungsgemäß dadurch gelöst, daß die Metallträger-Katalysatoren mechanisch zu Partikeln zerkleinert werden, die sich in Gewicht, Form und/oder Größe voneinander unterscheiden, und daß unter Ausnutzung dieser Unterschiede edelmetallbehaftete Partikel von den übrigen Partikeln mechanisch abgetrennt werden.

Mit dem erfindungsgemäßen Verfahren ist es möglich, einen kompletten, wie üblich mittels hydraulischer Schere aus der Abgasleitung eines Kraftfahrzeuges herausgetrennten Katalysator mit flach gequetschten und daher nahezu verschlossenen Anschlußstutzen in einem einzigen Arbeitsgang in seine drei wesentlichen Bestandteile, nämlich erstens Hüllwerkstoff, zweitens Trägerfolie und drittens Washcoat mit Edelmetallen zu zerlegen, da offene Anschlußstutzen nicht erforderlich sind.

Dabei entsteht ein Gemenge, aus dein die einzelnen Bestandteile eines Metallträger-Katalysators mit einfachen Mitteln abgetrennt und einer Wiederverwendung sortenrein zugeführt werden können.

Die edelmetallhaltigen aus dem Washcoat stammenden Partikel sind staubförmig und können auf trockenem Wege beispielsweise durch Windsichtung, Zyklonabscheidung und Staubabscheidung in reiner Form isoliert werden. Aus diesen Partikeln können die Edelmetalle in an sich aus der Wiederaufarbeitung von Keramikträger-Katalysatoren bekannter Weise unter Verwendung von chemischen und mechanischen Verfahrensschritten zurückgewonnen werden.

Es hat sich als besonders vorteilhaft erwiesen, wenn die edelmetallbehafteten Partikel, aus dem Washcoat stammende staubförmige Partikel, bereits während der Zerkleinerung abgetrennt werden. Dies kann dadurch erreicht werden, daß durch die Zerkleinerungsvorrichtung ein starker Luftstrom geleitet wird, welcher ähnlich wie bei einem Windsichter leichte sowie strömungsungünstig geformte Partikel mitführt. Die Menge und die Zusammensetzung der ausgetragenen Partikel kann durch Dosierung des Luftstromes beeinflußt werden.

Die Zerkleinerung der Metallträger-Katalysatoren erfolgt zweckmäßigerweise durch Mahlen, vorzugsweise in einer Schlagmühle. Während üblicherweise beim Zerkleinern von Blechteilen in einer Schlagmühle am Ende des Mahlprozesses ein Produkt etwa einheitlicher Größe in kugeliger Form anfällt, wurde überraschenderweise gefunden, daß die bei Zerkleinerung von Metallträger-Katalysatoren durch Mahlen, insbesondere in einer Schlagmühle, erzeugten Partikel Unterschiede im Gewicht bzw. in den Abmessungen haben, je nachdem aus welchem Werkstoff des Katalysators sie bestehen.

In Versuchen konnte ermittelt werden, daß unter Einhaltung bestimmter Parameter, nämlich einer relativ langen Verweilzeit und einem engen Austrittsspalt, beim Mahlen von Metallträger-Katalysatoren die zerkleinerten Partikel aus dem Hüllwerkstoff, der Metallhülle, dem Einlaß- und Auslaßstutzen sowie gegebenenfalls Resten der Abgasleitung in flacher Form als große und schwere Partikel mit Abmessungen im Bereich von einigen bis zu mehreren Zentimetern anfallen. Aus den Trägerfolien entstehen kleinere überwiegend längliche Partikel mit Abmessungen bis zu einigen Zentimetern, aber auch sehr kleine Partikel. Aus dem edelmetallhaltigen Washcoat entstehen Partikel in Staubgröße.

Somit entstehen beim Mahlen von Metallträger-Katalysatoren in einer Schlagmühle bei gleichzeitiger starker Absaugung eine vom Luftstrom mitgeführte Fraktion A leichterer kleiner Partikel, die nahezu alle edelmetallbehafteten Washcoat-Partikel und einen Teil der aus den Trägerfolien stammenden Partikel enthält, und als Mühlenaustrag eine Fraktion B, welche überwiegend schwere große aus der Metallhülle und den Anschlußstutzen stammende Partikel sowie die restlichen aus den Trägerfolien stammenden Partikel enthält.

Die vom Luftstrom ausgetragenen Partikel der Fraktion A können in einem weiteren Separationsschritt beispielsweise mechanisch entsprechend ihrer Unterschiede in Größe, Form und Gewicht in eine edelmetallbehaftete Washcoat-Partikel enthaltende Fraktion A1 und eine aus den Trägerfolien stammende Partikel enthaltende Fraktion A2 getrennt werden. Die Durchführung der Trennung erfolgt vorzugsweise in einem Zyklonabscheider. Mittels des Zyklonabscheiders kann die Fraktion A2 aus dem Luftstrom entfernt werden. Die Partikel der Fraktion A1 können anschließend in einem vorzugsweise mit Filterschläuchen versehenen Staubabscheider ausgeschieden werden. Es ist aber auch möglich, die Partikel der Fraktion A durch Sieben, Auswaschen oder Magnetscheidung voneinander zu trennen.

Der für die Rückgewinnung der Katalysator-Edelmetalle erzeugte Washcoat-Staub der Fraktion A1 weist nur noch ca. 10 % des Gewichtes des ursprünglichen Gesamtgewichtes des Metallträger-Katalysators auf. Infolgedessen ist für die Rückgewinnung und Raffination der Edelmetalle nur noch ein geringer Aufwand an Chemikalien und Energie erforderlich.

Die Partikel der Fraktion B können zusätzlich in einem weiteren Separationsschritt vorzugsweise mittels eines Magnetscheiders in eine Fraktion B1 mit aus der Metallhülle und den Anschlußstutzen stammenden nichtmagnetischen Partikeln und eine Fraktion B2 mit von der Trägerfolie stammenden magnetischen Partikeln getrennt werden.

Vorteilhafterweise werden letzte Reste von an den Partikeln der Fraktion B haftenden edelmetallhaltigen Staubteilchen gelöst und der Fraktion A1 zugeführt. Dies kann dadurch erfolgen, daß die Fraktion B einer vibrierenden Behandlung beispielsweise während der Förderung zum Magnetscheider mittels eines Rüttelförderers, so daß letzte Staubteilchen infolge Vibration abgelöst und über eine mit dem Staubabscheider verbundene Absaugung der Fraktion A1 zugeführt werden können.

Die Fraktionen A2 und B2 der aus den Trägerfolien stammenden Partikel unterschiedlicher Form und Größe können anschließend zusammengeführt werden.

Somit liefert das Verfahren auf einfachem Wege nicht nur Washcoat-Partikel in hoher Reinheit mit relativ hohen Anteilen an Katalysator-Edelmetallen, die auf an sich bekannte Weise chemisch zurückgewonnen werden, sondern auch die edelmetallfreien Werkstoffe der gewichtsmäßigen Hauptbestandteile eines Metallträger-Katalysators in hoher Sortenreinheit.

Die nichtmagnetischen Partikel der Fraktion B1 können ohne chemische Behandlung in eine Edelstahlschmelze eingebracht werden, der Einsatz von Lösungsmitteln ist also nicht erforderlich. Die Partikel der Fraktionen A2 und B2 können ebenfalls ohne chemische Behandlung eingeschmolzen werden, vorzugsweise als Ausgangsmaterial für die Herstellung neuer Trägerfolie.

Eine Vorrichtung zur Aufbereitung von Metallträger-Katalysatoren, die eine Metallhülle mit Anschlußstutzen, Trägerfolien und auf den Trägerfolien aufgebrachte, oberflächenvergrößernde Überzüge (Washcoat) aufweisen, die Edelmetalle tragen, besteht erfindungsgemäß darin, daß ein mit den Metallträger-Katalysatoren beschickbarer mechanischer Zerkleinerer mit einer Absaugeinrichtung für eine Fraktion A verbunden ist, die einen ersten Trockenabscheider für eine Fraktion A2 und einen zweiten Trockenabscheider für eine Fraktion A1 enthält, und daß dem Zerkleinerer eine Auffang- und Transporteinrichtung für das Mahlgut, eine Fraktion B, nachgeschaltet ist.

Bei dem Zerkleinerer kann es sich um eine Schlagmühle, bei dem ersten Trockenabscheider um einen Zyklonabscheider und bei dem zweiten Trockenabscheider um einen Staubabscheider handeln.

Die Fraktion A1 setzt sich überwiegend aus edelmetallbehafteten Partikeln zusammen, während Fraktion A2 von der Absaugung ausgetragene Trägerfolien-Partikel enthält.

Fraktion B setzt sich zusammen aus schweren großen Partikeln aus der Metallhülle, den Anschlußstutzen und aus den restlichen Partikeln der Trägerfolien.

Die Auffang- und Transporteinrichtung ist vorzugsweise als Rüttelförderer ausgebildet und mit einer Absaugung versehen, die mit dem zweiten Trockenabscheider verbunden ist.

Die Trennung der Partikel der Fraktion B ist möglich, wenn der Auffang- und Transporteinrichtung ein Magnetscheider nachgeordnet ist.

Der Magnetscheider entfernt die magnetischen aus den Trägerfolien stammende Partikel als Fraktion B2 von den die Fraktion B1 bildenden aus der Metallhülle stammenden Partikeln.

In der Zeichnung ist ein bevorzugtes Ausführungsbeispiel der Erfindung dargestellt, das im folgenden näher erläutert wird.

Es zeigt
- Fig. 1: einen Metallträger-Katalysator in S-Form im Querschnitt,
- Fig. 2: einen vergrößerten Ausschnitt aus 1 und
- Fig. 3: schematisch im Fließbild ein Verfahren und eine Vorrichtung für die Aufbereitung von Metallträger-Katalysatoren.

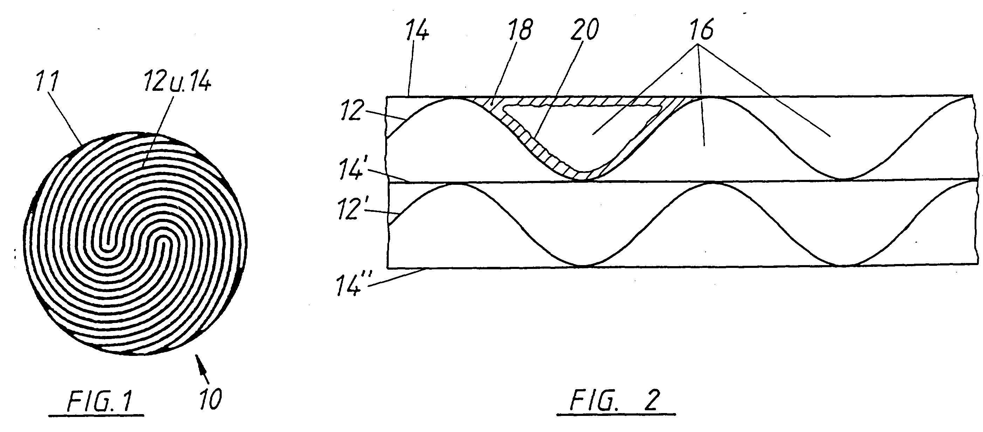

Metallträger-Katalysatoren werden in verschiedenen Größen und verschiedenen geometrischen Formen hergestellt. Fig. 1 zeigt schematisch einen Metallträger-Katalysator 10 mit einer 2 mm starken zylinderförmigen Metallhülle 11 aus Edelstahl im Querschnitt. Im Inneren des Katalysators 10 sind Trägerfolien 12, 14 in mehreren Lagen S-förmig angeordnet, wobei die Folien 12, 14 der einzelnen Lagen abwechselnd glatt und wellenförmig ausgebildet sind. Die Trägerfolien 12, 14 bestehen aus einer Fe-Cr-Al-Legierung von 0,05 mm Dicke.

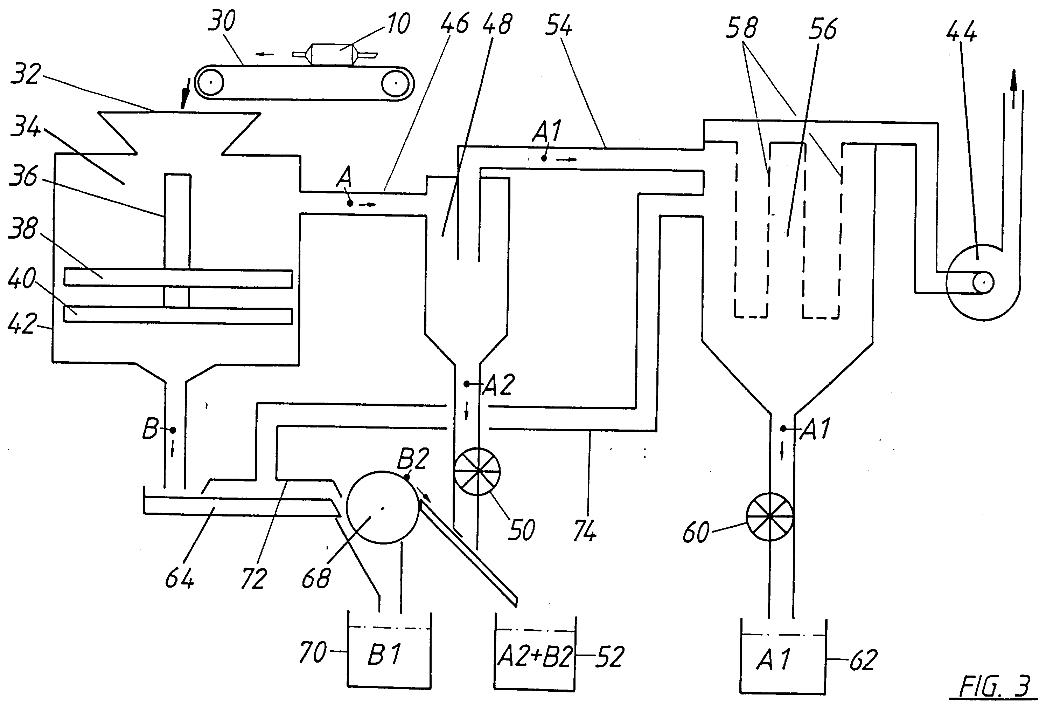

Fig. 2 zeigt einen vergrößerten Ausschnitt der Fig. 1, in dem zwei wellenförmige Trägerfolien 12, 12' und drei glatte Trägerfolien 14', 14'' 14" teilweise dargestellt sind. Die wellenförmigen Trägerfolien 12, 12' sind im Bereich ihrer Wellenmaxima mit den glatten Trägerfolien 14, 14' ,14'' verlötet.

Zwischen den wellenförmigen Trägerfolien 12, 12' und den glatten Trägerfolien 14, 14',14" sind zahlreiche etwa dreieckförmige von den Abgasen eines Verbrennungsmotors in Längsrichtung durchströmte Kanäle gebildet. In Fig. 2 ist stellvertretend für alle Kanäle nur in einem der Kanäle 16 eine als Washcoat 18 bezeichnete Schicht aus Gamma-Aluminium-Oxid mit besonders großer Oberfläche dargestellt. Die Oberfläche des Washcoats 18 ist mit katalytisch wirkenden Edelmetallen 20 wie Platin, Palladium oder Rhodium imprägniert.

In Fig. 3 ist im schematischen Fließbild die Aufbereitung von Metallträger-Katalysatoren 10 dargestellt. Die aufzubereitenden Metallträger-Katalysatoren 10 werden von einem hier nicht dargestellten Sammelbunker mittels eines Kettenförderers 30 in den Einfülltrichter 32 einer Schlagmühle 34 mit einem vertikal rotierenden Rotor 36 gegeben. Die Drehzahl des Rotors 36 beträgt etwa 600 U/min, die Umfangsgeschwindigkeit des Rotors beträgt maximal 45 m/s. Am Rotor 36 ist ein Vorzerkleinerer 38 mit zwei gegenüberliegenden Schlagflächen befestigt, um die Metallhülle 11 eines Katalysators 10 mechanisch aufzutrennen. Anschließend erfolgt ein Zermahlen zwischen Mahlring 40 und Außenwand 42 der Schlagmühle 34, wobei Partikel von verschiedener Größe, Form und Gewicht entstehen.

Diese werden bereits in der Schlagmühle durch Windsichtung separiert, indem von einem Radialventilator 44 ständig ein starker Luftstrom von mehr als 10 000 m³/h über eine Leitung 46 durch die Schlagmühle 34 gesaugt wird.

Der Luftstrom reißt eine Fraktion A mit, welche längliche Partikel aus den Trägerfolien 12, 14 sowie edelmetallbehaftete staubförmige Partikel aus dem Washcoat 18 enthält. Die Leitung 46 mündet in einen Zyklonabscheider 48, in dem die länglichen aus den Trägerfolien 12, 14 stammenden Partikel als Fraktion A2 aus dem Luftstrom abgetrennt und über eine Zellradschleuse 50 einem Sammelbehälter 52 zugeführt werden. Der Luftstrom wird über eine Leitung 54 vom Zyklonabscheider 48 zu einem Staubabscheider 56 geführt, welcher mit Filterschläuchen 58 versehen ist.

An den Filterschläuchen 58 setzt sich eine nahezu ausschließlich aus staubförmigen Partikeln des Washcoat 18 bestehende edelmetallhaltige Fraktion A1 ab, die über eine Zellradschleuse 60 einem Sammelbehälter 62 zugeführt wird.

Als Mahlgut verläßt eine Fraktion B, welche schwere aus Metallhülle stammende Partikel und die restlichen aus den Trägerfolien stammenden Partikel enthält, die Schlagmühle 34. Die Fraktion B wird von der Schlagmühle 34 auf einer Vibrations-Förderrinne 64 zu einem Magnetscheider 68 transportiert.

Unmagnetische aus Metallhülle stammende Partikel gelangen als Fraktion B1 in einen Sammelbehälter 70, während magnetische aus den Trägerfolien stammende Partikel als Fraktion B2 vom Magnetscheider separiert und dem Sammelbehälter 52 zugeführt werden, in den auch die Partikel der Fraktion A2 gelangen.

Über der Vibrations-Förderrinne 64 ist eine Absaughaube 72 vorgesehen, welche über eine Leitung 74 mit dem Staubabscheider 56 verbunden ist. An Partikeln der Fraktion B anhaftende staubförmige Partikel der Fraktion A1 werden infolge Vibration gelöst und gelangen somit zur Fraktion A1.

## Patentansprüche

1. Verfahren zur Aufbereitung von Metallträger-Katalysatoren, die eine Metallhülle, Trägerfolien und auf den Trägerfolien angeordnete, oberflächenvergrößernde Überzüge (Washcoat), die Edelmetalle tragen, aufweisen,
**dadurch gekennzeichnet**,
daß die Metallträger-Katalysatoren (10) mechanisch zu Partikeln zerkleinert werden, die sich in Gewicht, Form und/oder Größe voneinander unterscheiden, und daß unter Ausnutzung dieser Unterschiede edelmetallbehaftete Partikel von den übrigen Partikeln mechanisch abgetrennt werden.

2. Verfahren nach Anspruch 1,
**dadurch gekennzeichnet,**
daß zumindest die edelmetallbehafteten Partikel bereits während der Zerkleinerung vorzugsweise mittels eines Luftstromes abgetrennt werden.

3. Verfahren nach Anspruch 1 oder 2,
**dadurch gekennzeichnet,**
daß die Metallträger-Katalysatoren (10) durch Mahlen vorzugsweise in einer Schlagmühle (34) zerkleinert werden.

4. Verfahren nach einem der Ansprüche 1 bis 3,
**dadurch gekennzeichnet,**
daß aus dem Luftstrom vorzugsweise in einem Zyklonabscheider (48) erst edelmetallfreie Partikel, insbesondere aus Trägerfolien (12, 14) stammende Partikel, entfernt und anschließend vorzugsweise in einem Staubabscheider (56) die edelmetallbehafteten Partikel abgeschieden werden.

5. Verfahren nach einem der Ansprüche 1 bis 4,
**dadurch gekennzeichnet,**
daß aus dem Mahlgut vorzugsweise mittels eines Magnetscheiders (68) aus Trägerfolien (12, 14) stammende magnetische Partikel abgetrennt werden.

6. Verfahren nach Anspruche 5,
**dadurch gekennzeichnet**,
daß anhaftende edelmetallhaltige Staubteilchen vom Mahlgut durch Vibration vorzugsweise einem Rüttelförderer (64) gelöst und dem Staubabscheider (56) zugeführt werden.

7. Verfahren nach den Ansprüche 4 und 5,
**dadurch gekennzeichnet**,
daß die aus dem Luftstrom und die aus dem Mahlgut abgeschiedenen aus den Trägerfolien stammenden Partikel vereinigt werden.

8. Vorrichtung zur Verarbeitung von Metallträger-Katalysatoren, die eine Metallhülle, Trägerfolien und auf den Trägerfolien aufgebrachte, oberflächenvergrößernde Überzüge (Washcoat), die Edelmetalle tragen, aufweisen,
**dadurch gekennzeichnet,**
daß ein mit den Metallträger-Katalysatoren (10) beschickbarer mechanischer Zerkleinerer (34) mit einer Absaugeinrichtung (44, 46) für eine Fraktion A verbunden ist, die einen ersten Trockenabscheider (48) für eine Fraktion A2 und einen zweiten Trockenabscheider (56) für eine Fraktion Al enthält, und daß dem Zerkleinerer (34) eine Auffang- und Transporteinrichtung (64) für das Mahlgut, eine Fraktion B, nachgeschaltet ist.

9. Vorrichtung nach Anspruch 8,
**dadurch gekennzeichnet**,
daß der mechanische Zerkleinerer (36) eine Schlagmühle ist.

10. Vorrichtung nach Anspruch 8,
**dadurch gekennzeichnet,**
daß der erste Trockenabscheider (48) ein Zyklonabscheider ist.

11. Vorrichtung nach Anspruch 8,
**dadurch gekennzeichnet,**
daß der zweitr Trockenabscheider (56) ein Staubabscheider ist.

12. Vorrichtung nach Anspruch 8,
**dadurch gekennzeichnet,**
daß die Auffang- und Transporteinrichtung (64) vorzugsweise als Rüttelförderer ausgebildet und mit einer Absaugung (72) versehen ist ist, die mit dem zweiten Trockenabscheider (56) verbunden ist.

13. Vorrichtung nach einem der Ansprüche 8 bis 12,
**dadurch gekennzeichnet,**
daß der Auffang- und Transporteinrichtung (64) ein Magnetscheider (68) nachgeordnet ist.

## Claims

1. Process for recycling metal-supported catalysts having a metal cover, carrier foils and surface-enlarging coatings (washcoats) arranged on the carrier foils and bearing noble metals, characterised in that the metal-supported catalysts (10) are mechanically crushed into particles of different weights, shapes and/or sizes and that particles loaded with noble metals are mechanically separated off from the remaining particles using these differences.

2. Process according to claim 1, characterised in that at least the particles loaded with noble metals are separated off during the crushing operation, preferably by means of an air current.

3. Process according to claim 1 or claim 2, characterised in that the metal-supported catalysts (10) are crushed by grinding, preferably in a beater mill (34).

4. Process according to one of claims 1 to 3, characterised in that noble metal-free particles, in particular particles originating from carrier foils (12, 14) are first removed from the air current, preferably in a cyclone separator (48), and then the particles loaded with noble metals are separated off, preferably in a dust separator (56).

5. Process according to one of claims 1 to 4, characterised in that magnetic particles originating from carrier foils (12, 14) are separated off from the ground material, preferably by means of a magnetic separator (68).

6. Process according to claim 5, characterised in that adherent noble metal-containing dust particles are removed from the ground material by vibration, preferably by a vibrating conveyor (64), and are fed to the dust separator (56).

7. Process according to claims 4 and 5, characterised in that the particles originating from the carrier foils separated off from the air current and from the ground material are combined.

8. Apparatus for recycling metal-supported catalysts having a metal cover, carrier foils and surface-enlarging coatings (washcoats) arranged on the carrier foils and bearing noble metals, characterised in that a mechanical crusher (34) which can be charged with the metal-supported catalysts (10) is connected to an exhausting device (44, 46) for a fraction A which contains a first dry separator (48) for a fraction A2 and a second dry separator (56) for a fraction Al and that a collecting and conveying device (64) for the ground material, a fraction B, is arranged downstream of the crusher (34).

9. Apparatus according to claim 8, characterised in that the mechanical crusher (36) is a beater mill.

10. Apparatus according to claim 8, characterised in that the first dry separator (48) is a cyclone separator.

11. Apparatus according to claim 8, characterised in that the second dry separator (56) is a dust separator.

12. Apparatus according to claim 8, characterised in that the collecting and conveying device (64) is preferably a vibrating conveyor and is provided with an exhausting device (72) which is connected to the second dry separator (56).

13. Apparatus according to one of claims 8 to 12, characterised in that a magnetic separator (68) is arranged downstream of the collecting and conveying device (64).

## Revendications

1. Procédé pour préparer des catalyseurs a support métallique, qui portent une enveloppe métallique, des feuilles de support et des revêtements (Washcoat) qui augmentent la surface et sont disposés sur les feuilles de support et portent des métaux précieux, caractérisé en ce qu'on fragmente mécaniquement les catalyseurs (10) à support métallique pour obtenir des particules qui diffèrent les unes des autres du point de vue poids et/ou taille et qu'en utilisant ces différences, on sépare mécaniquement les particules contenant un métal précieux, des autres particules.

2. Procédé selon la revendication 1, caractérisé en ce qu'on sépare au moins les particules contenant un métal précieux déjà pendant la fragmentation, de préférence à l'aide d'un courant d'air.

3. Procédé selon la revendication 1 ou 2, caractérisé en ce qu'on fragmente les catalyseurs (10) à support métallique par broyage de préférence dans un broyeur à percussion (34).

4. Procédé selon l'une des revendications 1 à 3, caractérisé en ce qu'on élimine du courant d'air, de préférence dans un séparateur cyclone (48), uniquement des particules ne contenant pas de métal précieux, notamment des particules provenant de feuilles de support (12,14) et qu'ensuite on amène les particules contenant un métal précieux à se déposer de préférence dans un séparateur de poussière (56).

5. Procédé selon l'une des revendications 1 à 4, caractérisé en ce qu'on sépare des particules magnétiques, provenant de feuilles de support (12,14), à partir de la matière broyée, de préférence au moyen d'un séparateur magnétique (68).

6. Procédé selon la revendication 5, caractérisé en ce qu'on sépare des particules de poussière adhérentes, contenant un métal précieux, de la matière broyée, au moyen de vibrations appliquées de préférence à un convoyeur secouant (64) et qu'on les envoie au séparateur de poussière (56).

7. Procédé selon les revendications 4 et 5, caractérisé en ce qu'on rassemble les particules provenant du courant d'air et les particules déposées à partir de la matière broyée et provenant des feuilles de support.

8. Dispositif pour traiter des catalyseurs à support métallique, qui comporte une enveloppe métallique, des feuilles de support et des revêtements (Washcoat) qui augmentent la surface et sont disposés sur les feuilles de support et portent des métaux précieux, caractérisé en ce qu'un dispositif de fragmentation mécanique (34), pouvant être chargé par les catalyseurs (10) à support métallique, est relié à un dispositif d'aspiration (44,46) prévu pour une fraction A et qui contient un premier séparateur à sec (48) prévu pour une fraction A2 et un second séparateur à sec (56) prévu pour une fraction A1, et qu'un dispositif de collecte et de transport (64) pour la matière broyée, une fraction B, est monté en aval du dispositif de fragmentation (34).

9. Dispositif selon la revendication 8, caractérisé en ce que le dispositif de fragmentation mécanique (36) est un broyeur à percussion.

10. Dispositif selon la revendication 8, caractérisé en ce que le premier séparateur à sec (48) est un séparateur cyclone.

11. Dispositif selon la revendication 8, caractérisé en ce que le second séparateur à sec (56) est un séparateur de poussière.

12. Dispositif selon la revendication 8, caractérisé en ce que le dispositif de collecte et de transport (64) est agencé de préférence sous la forme d'un convoyeur secouant et est pourvu d'une unité d'aspiration (72), qui est reliée au second séparateur à sec (56).

13. Dispositif selon l'une des revendications 8 à 12, caractérisé en ce qu'un séparateur magnétique (68) est disposé en aval du dispositif de collecte et de transport (64).
